Europäisches Patentamt

European Patent Office

Office européen des brevets

(19)

(11) Publication number: **0 044 957**
**B1**

(12) **EUROPEAN PATENT SPECIFICATION**

(45) Date of publication of patent specification: **11.01.84**

(51) Int. Cl.³: **F 22 B 1/18**

(21) Application number: **81105015.2**

(22) Date of filing: **29.06.81**

(54) **System for recovering latent and sensible heat of effluent gases from a melting installation, for the purpose of obtaining electric and/or heat energy.**

(30) Priority: **24.07.80 IT 2368280**

(43) Date of publication of application:
**03.02.82 Bulletin 82/5**

(45) Publication of the grant of the patent:
**11.01.84 Bulletin 84/2**

(84) Designated Contracting States:
**BE DE FR GB LU NL SE**

(56) References cited:
**DE - A - 2 942 609**
**DE - C - 1 141 646**
**FR - A - 370 330**
**FR - A - 884 640**
**FR - A - 940 174**
**FR - A - 1 228 730**
**FR - A - 2 434 335**
**FR - E - 53 665**
**GB - A - 948 144**

(73) Proprietor: **Costruzioni Meccaniche F.B.M. S.p.A.**
**Via R. Lambruschini, 15**
**I-20158 Milano (IT)**
(73) Proprietor: **Teksid S.p.A.**
**Corso Mortara, 7**
**I-10149 Torino (IT)**

(72) Inventor: **Mischiatti, Mario**
**Via C. Linati 7**
**Como (IT)**

(74) Representative: **Jarach, Angelalberto, Dr. Ing.**
**Ingg. Guzzi, Ravizza & C. Via Broletto, 39**
**I-20121 Milano (IT)**

Courier Press, Leamington Spa, England.

## System for recovering latent and sensible heat of effluent gases from a melting installation, for the purpose of obtaining electric and/or heat energy

This invention relates to a system of recovering latent and sensible heat of effluent gases from a cupola for cast iron production, or from other similar melting installation, for the purpose of obtaining electric and/or heat energy under the form of steam and/or hot water.

The purpose of this system is to recover latent and sensible heat of gas having low-energy contents. It is not possible to achieve this result by means of the known boiler systems as their flame would not be self-maintaining. Such know boiler systems are described in the following specifications:
DE—A—2 942 609 (Energiagazdalkodasi Intezet)
DE—C—1 141 646 (Bahnbedarfrodberg)
GB—A—948 144 (Waagner-Biro)
FR—A—940 174 (Poujardieu)
FR—A—884 640 (Espujols)
FR—A—1 228 730 (De Lavals)

These boiler systems are all fit for burning only conventional fuels and therefore they do not need e.g. an oven to burn the fuel.

Among them the GB—A—948.144 particularly concerns converters in steel-making plants.

It is a compact system with heating surfaces for the first flue consisting of tubes or cooled plates and for the second coil type flue.

This patent protects with dampers the insulation means between the first and the second flues, so as one is able to burn solid fuels, and it protects as well the tube cleaning and gases suction system.

It is to be expected that these gases come out of the converters at a very high temperature.

Such a patent does not interfere with the present Patent Application as the latter concerns melting cupola installations with their well-knowns, quite different problems of difficult combustion, boiler geometry, gas flow paths and operating manner.

Among the known and more advanced plants are particularly to be mentioned those of the patents FR—A—370 330 Wegener, FR—E—53 665 (L. von Roll AG. für Kommunale Anlagen) and FR—A—2 434 335 (Vereinigte Kesselwerke).

In the French patent 370 330 is not provided an oven to burn gases and to sustain the flame; the combustion gases contain necessarily dust and other pollutant substances; the superheater is arranged in an annular chamber and the combustion gases pass through it from bottom to top.

Two heat-recovering boilers are already provided but the steam separator is built in the fire-tube boiler.

In the FR—E— 53 665 is also not provided an oven to burn the gases and to sustain the flame; two heat-recovering boilers however are provided; in the fire-tube one of the gases pass through it from bottom to top, and therefore no self-cleaning is possible; is lacking too the superheating device which is necessary to produce electric energy.

The French patent N. 2 434 335 relates to the combustion of solid fuels by the use of primary, secondary and tertiary air, which is injected at different places of the plant. The patent provides already an air-economizer and air-preheater. The latters are however not placed so as to be passed through allowing in that manner their self-cleaning and limiting the dust deposition in said apparatus.

It is an object of the invention to recover the latent and sensible heat existing in effluent gases of melting installations in order to produce electric and/or heat energy.

First characteristics of the system in accordance with the invention is that a thermal unit is provided essentially consisting of a pair of waste heat boilers both vertical, of which the first one is of the water tube type and the second is of the fire tube type, with a common steam separator connected to and installed above these boilers.

Second characteristic of the system in accordance with the invention is that a water tube boiler is provided, functioning by radiation and convection having two round manifolds, the first one of which is designed to distribute water in the vertically arranged tubes along one or more peripheral circumferences, while the second one collects the mixture of water and steam from above and conveys it by means of suitable piping to the steam separator, all this leaving the central part of the boiler free in the lower zone and consequently the heat transfer surfaces are exposed to fouling only in a limited degree.

Third characteristic of the system in accordance with the invention is that the lower part of the above mentioned water tube boiler functioning by radiation and convection, forms actually the end part of the combustion chamber hence guaranteeing improved combustion efficiency.

Fourth characteristic of the system in accordance with the invention consists in the provision — when electric energy is to be produced — of a superheater, with vertical, and therefore better supported tubes, consisting of two sections, of which the first is installed inside the top part of the first boiler, and the second one is installed between the two waste heat boilers.

Of these two sections, the first, placed in the water tube boiler, permits convective heat transfer to take place, as heat transfer by radiation is less efficient at this point. The shape of the second section is such as to permit automatic discharge of dust by gravity.

Fifth characteristic of the system in accordance with the invention is that the two water tube and fire tube boilers are arranged in series so as to permit the gases which pass through them, to flow from bottom to top in the water tube boiler licking said tubes, and form top to bottom in the fire tube boiler with consequent self cleaning of the tubes.

Sixth characteristic of the system in accordance with the invention is that the fire tubes are either smooth or finned on the inside, according to the degree of contamination of the gases, but they are at any rate less subject to deposition of dust in them or scaling because, as said previously, the gases flow inside them from top to bottom, hence they are easily cleanable by blowing or by mechanical means.

Seventh characteristic of the system in accordance with the invention consists in the provision of an economizer and, when necessary, a preheater for the combustion air for the gases, arranged so as to permit subsequent vertical flow through them from top to bottom, and preferably staggered, in order to permit self cleaning and, at the same time, to avoid deposition of dusts in said apparatus form the fire tube boiler.

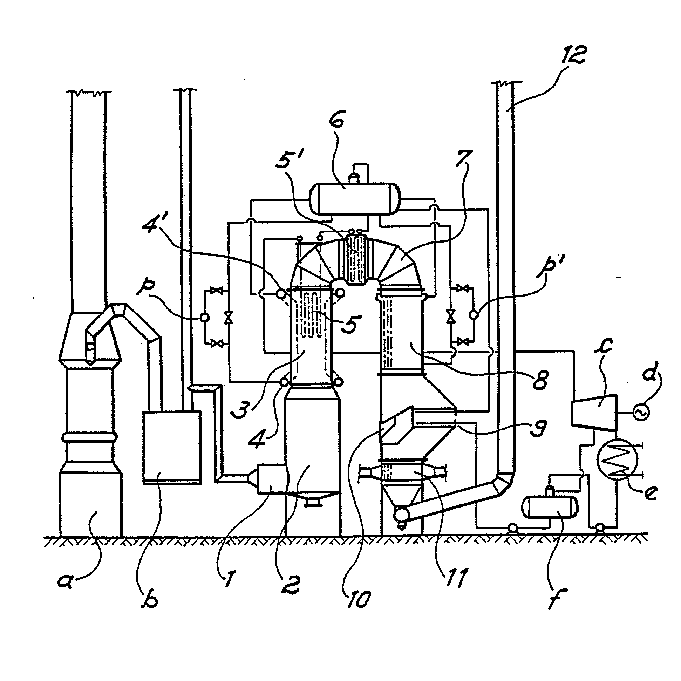

These main characteristics and other ones of less importance will appear clear from the following completion of the description with reference to the accompanying drawing, given as an exemplification of the principles of the invention, without limitation, illustrating a preferred embodiment of the system in accordance with the invention.

As can be seen from the drawing, the system consists of, and is characterized by a thermal unit comprising various pieces of apparatus denoted by progressive reference numbers, further completed by other well known apparatus installed upstream and downstream to said thermal unit, designated by small letters.

More precisely in the figure, there is a burner denoted by 1 with relative combustion chamber 2, while 3 designates a water tube waste heat boiler functioning by radiation and convection which is provided with round manifolds 4, 4', one designed to distribute the water in the vertically arranged tubes along one or more peripheral circumferences, and the other to collect the water and steam mixture from the top and convey it to steam separator 6 through suitable piping.

Hence the central part of the lower zone in the boiler is free, and therefore in actual fact forms an extension to combustion chamber 2, and the outer surfaces of the tubes, that is to say, those involved in the heat transfer, are only exposed in a limited degree to fouling by the effluent gases which lick them when flowing towards the top.

The system also comprises, when electric energy is to be produced, a superheater which is likewise (see drawing) preferably made up of two separate sections 5 and 5', both with vertical, and therefore better supported tubes, of which the first section 5, is installed inside the upper part of the water tube waste heat boiler 3, and the second section 5' is installed between the two waste heat boilers 3 and 8.

Of these two sections, the first, denoted by 5, permits convective heat transfer to take place as heat transfer by radiation at that point of boiler 3 is less efficient.

The second section 5' of the superheater is, in turn, connected to the two boilers 3 and 8 by means of piping 7 which permits automatic discharge of the dusts by gravity.

Connected in series with the first water tube boiler 3 is, as said, a second fire tube boiler 8, and the gases, which pass through them, flow in the first one from bottom to top, while in the second one they flow from top to bottom, licking the water tubes on the outside in the first boiler, and flowing inside the first tubes of the second boiler with consequent self cleaning of the latter.

The internal walls of the fire tubes can be smooth or finned; they are in all cases less subject to deposition of dusts on their walls or to scaling as in them the direction of flow of the gases is towards the bottom, hence they are easy to clean either by blowing or by mechanical means.

Naturally the system can undergo many variations, and superheater 5, 5' can also be provided in one section, and can be located in either one of the two positions designated.

The orignal thermal unit is completed by economizer 9 with side dust discharge 10 and combustion air preheater 11.

The fumes at the preheater 11 outlet are conveyed to chimney 12. If combustion air preheater 11 is not required, the fumes are directly conveyed from economizer 9 to chimney 12.

As can be seen in the preferred embodiment of the invention illustrated in the figure, direction of flow of the gases through the economizer 9 and air preheater 11 is from top to bottom, and these items are staggered, hence ensuring a self cleaning action, as well as minimum deposition of any dust which may still come in from boiler 8.

For the purpose of completion, there is illustrated in the drawing cupola *a* for cast iron production, upstream to the thermal unit.

The system in accordance with the invention is designed to recover the latent and sensible heat from the effluent gases of this cupola.

The letter *b* denotes a dust collecting apparatus. The letters p, p' denote two pumps to aid circulation if required.

As stated in the background section, obviously instead the cupola for cast iron production, any other similar melting installation could likewise be provided.

Lastly, downstream to the thermal unit, there is represented a set of already known equipment designed to transform, when specifically requested, the heat energy obtained from the thermal unit thanks to the production of steam, into electric energy.

This converter set substantially consists of a turbine *c*, and alternator *d*, a condenser *e* and a degasser *f.*

In this case, the steam from superheater 5, 5' is conveyed to turbine *c* and is returned to the thermal unit under the form of feed water in economizer *9* via a degasser *f.*

As emphasized more than once, and as is obvious to a person skilled in the art, that which has been illustrated and described represents a preferred embodiment of the system in accordance with the invention.

Other variations may however be carried out to the actual system, some of which have already been pointed out in the description without departing from the true spirit of the present invention which in fact includes them all and which is defined by the following claims.

**Claims**

1. System for recovering latent and sensible heat of effluent gases from a cupola for cast iron production or from other similar melting installation, for the purpose of obtaining electric and/or heat energy under the form of steam and/or hot water, comprising a thermal unit and an electric unit for converting the heat energy into electric energy characterized in that the thermal unit substantially consists of, downstream to not only a burner (1) but also a combustion chamber (2), two vertical waste heat boilers, of which the first (3) is of water tube type, and the second of the fire tube type itself known (8), with a steam separator (6) installed over, but independent from and connected to them through rising and descending pipings.

2. System as claimed in claim 1, characterized in that the two water tube and fire tube boilers (3, 8) are arranged in series, and are connected by suitable sloping piping (7), thereby permitting the gases flowing through said boilers (3, 8), to flow from bottom to top in the water tube one (3) licking said tubes, and from top to bottom in the fire tube one (8) with consequent possible self cleaning of the latter tubes with smooth internal surface.

3. System as claimed in claim 2, but in which the fire tube boiler (8) has said tubes provided with finned or at any rate not smooth internal surface, still cleanable by blowing or mechanical means.

4. System as claimed in the preceding claims, characterized in that the water tube boilers (3) functions not only by radiation but also by convection and is arranged in series with the combustion chamber (2) at the outlet of the latter, being provided with two manifolds (4, 4') for the purpose of which the lower one (4) is designed to distribute the water in the vertically arranged tubes coming from the separator (6), while the other (4') is designed to collect the mixture of steam and water at the top and convey it by means of suitable piping to said steam separator (6), all this leaving the central section of the boiler (3) free in lower zone, hence resulting in an increased efficiency of the heat transfer surfaces, which are consequently exposed to fouling in a limited degree.

5. System as claimed in claim 1 to 4, characterized in that — when electric energy is to be produced — a superheater (5, 5') is provided that can be in two sections, the first section (5) and the second section (5') being installed between the two waste heat boilers (3, 8).

6. System as claimed in claim 5, but in which the vertical tube superheater consists of just one section (5) installed in the water tube boiler (3).

7. System as claimed in claim 5, but in which the vertical tube superheater consists of just one section (5') installed between the two boilers (3, 8).

8. System as claimed in any one or more of the preceding claims, characterized in that the thermal unit is completed with an economizer (9) and air preheater (11) themselves known arranged so that the subsequent vertical flow in them is from top to bottom in an original manner, with said economizer (9) and preheater (11) being staggered, so as to permit their relative self cleaning, and at the same time so as to limit deposition in said apparatus of dusts from the waste heat boiler (8) at upstream side, and further characterized in that chimney (12) is also provided for discharge of fumes from the preheater (11).

9. System as claimed in claim 8 but in which the preheater (11) for the combustion air for the gases is omitted.

10. System as claimed in any one or more of claims 1 to 9, characterized in that a coverter unit for transformation of heat energy into electric energy is provided, substantially comprising a turbine (c) fed by steam from the superheater (5, 5'), an alternator (d), a condenser (e) and a degasser (f) able, in turn, to send the feed water back again to the thermal unit and to the economizer (9).

**Patentansprüche**

1. Anlage zur Rückgewinnung der latenten und fühlbaren Wärme von Abgasen aus einem Kupolofen für die Gußeisenerzeugung oder einer ähnlichen Schmelzeinrichtung zum Zwecke des Gewinnens von elektrischer und/oder thermischer Energie in Form von Dampf und/oder warmem Wasser, enthaltend eine Wärmeeinheit und eine elektrische Einheit zur Umwandlung der thermischen Energie in elektrische Energie, dadurch gekennzeichnet, daß die Wärmeeinheit im wesentlichen stromabwärts nicht nur eines Brenners (1), sondern auch einer Brennkammer (2) besteht aus zwei vertikalen Abhitzekesseln, von welchen der erste (3) ein Wasserrohrkessel ist und der zweite ein an sich bekannter Rauchrohrkessel (8) ist, wobei ein Dampfabscheider (6) oberhalb, aber unabhängig von den Kesseln angeordnet und mit denselben durch aufsteigende und absteigende Rohrleitungen verbunden ist.

2. Anlage nach Anspruch 1, dadurch gekennzeichnet, daß der Wasserrohrkessel (3) und der Rauchrohrkessel (8) hintereinander geschaltet sind und mittels einer geeignet geneigten Leitung (7) miteinander verbunden sind, so daß es dem durch die Abhitzkessel (3, 8) strömenden Gasen ermöglicht ist, den Wasserrohrkessel von unten nach oben zu durchströmen und dabei an den Rohren vorbeizustreichen, und den Rauchrohrkessel (8) von oben nach unten mit der sich folgerichtig ergebenden Möglichkeit zur Selbstreinigung der eine glatte Innenoberfläche aufweisenden letztgenannten Rohre zu durchströmen.

3. Anlage nach Anspruch 2, wobei jedoch der Rauchrohrkessel (8) geripte oder jedenfalls nicht glatte Oberflächen aufweisende Rohre aufweist, welche indes durch Durchblasen oder mittels mechanischer Einrichtungen reinigbar.

4. Anlage nach den vorhergehenden Ansprüchen, dadurch gekennzeichnet, daß der Wasserrohrkessel (3) nicht lediglich durch Strahlung, sondern auch durch Konvektion arbeitet und in Reihe mit der Brennkammer (2) an deren Ausgang angeschlossen ist, wobei zwei Sammerlrohre (4, 4') vorgesehen sind, von welchen das untere (4) zur Verteilung von Wasser in die senkrechten, vom Abscheider (6) kommenden Rohre dient, während das andere zum Auffangen einer Mischung aus Wasser und Dampf von oben sowie zum Leiten derselben durch geeignete Rohre in den obengenannten Gasabscheider (6) bestimmt ist, wobei auf diese Weise der Zentralabschnitt des Kessels (3) in seiner unteren Zone freigehalten ist, was zu einer gesteigerten Wirksamkeit der Wärmeübergangsflächen führt, welche folglich der Verschmutzung lediglich in einem geringeren Maßstab ausgesetzt sind.

5. Anlage nach Anspruch 1 bis 4, dadurch gekennzeichnet, daß — bei Erzeugung von elektrischer Energie — ein gegebenenfalls in zwei Abschnitten unterteilter Überhitzer (5, 5') vorgesehen ist, wobei der erste Abschnitt (5) und der zweite Abschnitt (5') zwischen den beiden Abhitzekesseln (3, 8) angeordnet sind.

6. Anlage nach Anspruch 5, wobei jedoch der Steilrohrüberhitzer lediglich aus einem im Wasserrohrkessel (3) angeordneten Abschnitt (5) besteht.

7. Anlage nach Anspruch 5, wobei jedoch der Steilrohrüberhitzer lediglich aus einem zwischen den beiden Kesseln (3, 8) angeordneten Abschnitt (5') besteht.

8. Anlage nach wenigstens einem der vorhergehenden Ansprüche, dadurch gekennzeichnet, daß die Wärmeeinheit in an sich bekannter Weise durch einen Ökonomisator (9) und einen Luftvorwärmer ergänzt ist, so daß die nachfolgende Vertikalströmung in denselben auf originale Weise von oben nach unten verläuft, wobei der Ökonomisator (9) und der Vorwärmer (11) versetzt zueinander angeordnet sind, um ihre relative Selbstreinigung zu gestatten und um gleichzeitig das Ablagern von Staub in der Anlage aus dem Abhitzekessel (8) auf der strömungsaufwärtigen Seite zu begrenzen, ferner gekennzeichnet dadurch, daß auch ein Schornstein (12) vorgesehen ist, um Verbrennungsgase aus dem Vorwärmer (11) auszutragen.

9. Anlage nach Anspruch 8, jedoch ohne den Verbrennungsluftvorwärmer für die Gase.

10. Anlage nach wenigstens einem der Ansprüche 1 bis 9, dadurch gekennzeichnet, daß eine Umwandlungseinheit zur Umwandlung von Wärmeenergie in elektrische Energie vorgesehen ist, bestehend im wesentlichen aus einer mit Dampf aus dem Überhitzer (5, 5') gespeisten Turbine (c), einem Wechselstromgenerator (d), einem Kondensator (e) und einem Entgaser (f), welcher seinerseits imstande ist, das zugeführte Wasser zurück in die Wärmeeinheit und zum Ökonomisator (9) zurückzusenden.

**Revendications**

1. Installation pour recouvrer la chaleur latente et sensible de gazes effluents d'un cubilot pour la production de font de fer ou bien d'une autre installation de fusion similaire, dans le but d'obtenir énergie électrique et/ou thermique en forme de vapeur et/ou d'eau chaude comprenant une unité thermique et une unité électrique pour convertir l'énergie thermique en énergie électrique, caractérisée en ce que l'unité thermique comprende substantiellement, d'aval non seulement d'un brûleur (1) mais aussi d'une chambre de combustion (2), deux chaudières verticales à chaleur perdue, dont la première (3) est du type à tubes d'eau, et la deuxième est du type à tubes de fumée par elle même connue (8), avec un séparateur de vapeur (6) installé au-dessus, mais indépendant d'elles et raccordé à elles par tuyauteries ascendantes et descendantes.

2. Installation suivant la revendication 1, caractérisée en ce que les deux chaudières à tubes d'eau et à tubes de fumée (3, 8) sont groupées en série raccordées par tuyaux en pente convenables (7) laissant ainsi que les gazes s'écoulent à travers de cettes chaudières (3, 8), c'est à dire du fond au sommet dans celle à tubes d'eau (3) léchant ces tubes, et du sommet au fond dans celle à tubes de fumée (8) avec conséquent possible nettoyage automatique de ces derniers tubes avec surface interne lisse.

3. Installation suivant la revendication 2, mais dans laquelle la chaudière à tubes de fumée (8) a ces tubes munis d'une surface interne avec ailettes ou de toute façon pas lisse, encore nettoyable par soufflage ou par des moyennes mécaniques.

4. Installation suivant les revendications précédentes, caractérisée en ce que la chaudière à tubes d'eau (3) fonctionne non pas seulement par rayonnement mais aussi par convection et elle est groupée en série avec la chambre de combustion (2) à la sortie de celle-ci, étant munie de deux collecteurs (4, 4'), dont l'inférieur (4) est destiné à distribuer l'eau dans les tubes verticaux provenant du séparateur (6), tandis que l'autre (4') est destiné à réunir au sommet le mélange de vapeur et d'eau et à le transporter par des tuyaux convenables au cité séparateur de vapeur (6), tout en laissant la section centrale de la chaudière (3) libre dans sa zone inférieure, ce qui a pour résultat d'accroître l'effet utile des surfaces d'échange de chaleur, qui sont ainsi exposées à des dépôts dans une mesure réduite.

5. Installation suivant les revendications de 1 à 4, caractérisée en ce que — quand on veut produire de l'énergie électrique — on pourvoit un surchauffeur (5, 5') qui peut avoir deux sections, la première section (5) et la deuxième section (5') étant installées entre les deux chaudières à chaleur perdue (3, 8).

6. Installation suivant la revendication 5, mais dans laquelle le surchauffeur à tubes verticaux ne consiste que d'une section (5) installée dans la chaudière à tubes d'eau (3).

7. Installation suivant la revendication 5, mais dans laquelle le surchauffeur à tubes verticaux ne consiste que d'une section (5') installée entre les deux chaudières (3, 8).

8. Installation suivant une seule ou plusieurs des revendications précéndentes, caractérisée en ce que l'unité thermique est complétée par un économiseur (9) et par un préchauffeur d'air (11), bien connus en eux mêmes, de sorte que le successif débit en eux est alors d'une façon originale du sommet au fond, ces économiseur (9) et préchauffeur (11) étant en quinconce, de sorte à permettre leur nettoyage relatif automatique, et en même temps à limiter la déposition dans ces appareils de poussière provenant de la chaudière à chaleur perdue (8) dans le côté amont, et caractérisée en outre par une cheminée (12) pour évacuer les fumées du préchauffeur (11).

9. Installation suivant la revendication 8 mais dans laquelle est omis le préchauffeur (11) pour l'air de combustion des gazes.

10. Installation suivant une ou plusieurs des revendications de 1 à 9, caractérisée en ce qu'elle est pourvue d'un convertisseur pour la transformation d'énergie thermique en énergie électrique, comprenant substantiellement une turbine (c) alimentée avec vapeur par le surchauffeur (5, 5'), un alternateur (d), un condensateur (e) et un dégazeur (f), propre à faire recouler de nouveau l'eau d'alimentation respectivement à l'unité thermique et à l'économiseur (9).

0 044 957